# EUROPEAN PATENT APPLICATION

(11) **EP 2 822 289 A1**
(43) Date of publication of application: **07.01.2015**
(21) Application number: 13198928.7
(22) Date of filing: 20.12.2013
(51) Int. Cl.: H04N 21/443, H04N 21/472, H04N 21/482, H04N 21/81

(54) **Rui system, rui server, rui terminal apparatus, and method of providing rui service**

(30) Priority: 05.07.2013 KR 20130078779
(71) Applicant: Samsung Electronics Co., Ltd, Gyeonggi-do 443-742 (KR)
(72) Inventor: Park, Se-dong, Seoul (KR); Lee, Dai-boong, Gyeonggi-do (KR); Cho, Sung-hee, Gyeonggi-do (KR)
(74) Representative: Bray, Richard Anthony

(57) **Abstract**

A remote user interface (RUI) system is provided. The RUI system includes: a first device; a second device configured to call a common application program interface (API) to request a RUI service from a first device; and the first device being configured to process the called common API in response to the request to provide the RUI service to the second device.

## Description

### CROSS-REFERENCE TO RELATED APPLICATION(S)

This application claims priority from Korean Patent Application No. 10-2013-0078779, filed on July 5, 2013, in the Korean Intellectual Property Office, the disclosure of which is incorporated herein by reference, in its entirety.

### BACKGROUND

### 1. Field

The exemplary embodiments relate to providing a technology for providing a remote user interface (RUI) service. More particularly, the exemplary embodiments relate to a RUI system that provides various types of RUI services to a RUI terminal apparatus, through a RUI server connected to a home network, the RUI server, the RUI terminal apparatus, and a method of providing an RUI service.

### 2. Description of the Related Art

A remote user interface (RUI) technology has been developed which transmits and controls data between devices in a home network. The RUI technology refers to providing technology that is based on a client-server structure and provides data, such as contents, etc., from a RUI server to a RUI client, according to a request from the RUI client or controls the RUI client. The RUI server and the RUI client are connected to each other through wired and/or wireless communication.

A RUI is not a concept that refers only to elements constituting a user interface such as an icon, a menu, a scrollbar, a window, a text, or the like. In other words, the RUI includes the elements and all types of data that are transmitted between the RUI server and the RUI client, such as A/V data, image data, web address information, synchronization information, a control signal, a channel list, an electronic program guide (EPG), etc.

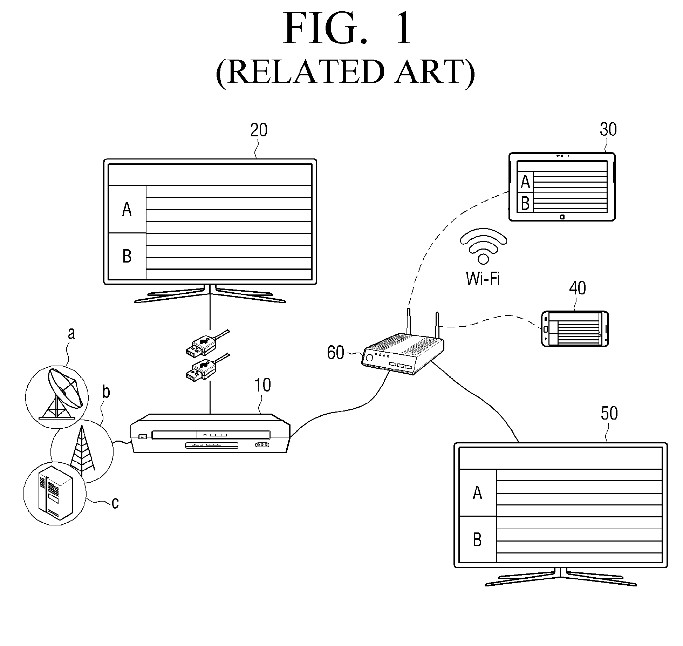

FIG. 1 is a view which illustrates illustrating a general structure of an RUI system. A RUI server 10, as shown in FIG. 1 may be provided with contents from a satellite broadcast a, terrestrial broadcast b, and an Internet Protocol Television (IPTV) service provider c, and may provide the broadcast and/or service contents to RUI clients that are located in a home. For example, the RUI server 10 may provide contents to a TV 20 by wire or may provide contents to a TV 50 positioned in another place of the home through the use of a repeater 60. The RUI server 10 may provide the contents to a tablet PC 30 or to a smart phone 40 through wireless communication and may manage or control the RUI clients.

Web-based Consumer Electronics Association's-2014 (CEA-2014), which is a representative technology standard of the RUI system, implements a technology that provides a RUI service by using text-based Hyper Text Markup Language (HTML). Various RUI technologies, such as image-based Remote Desktop protocol (RDP), eXpandable Home Theater (XHT), Widget Description Exchange Service (WiDeX), etc., have been studied.

Since a RUI server and a RUI client are independent devices in an RUI system, there is generally a difference in an operating system (OS) or in a hardware configuration. Therefore, application program interfaces (APIs) used by the RUI server and the RUI client become different from each other.

Since the RUI server and the RUI client use different APIs, the compatibility between devices is lowered. In addition, a load of a developer who develops a related application is increased. For example, the developer may understand the API of the RUI server and the API of the RUI client to use a service of the RUI server in the RUI client. In particular, if one RUI server provides a service to a plurality of RUI clients, and APIs of the RUI clients are different from one another, compatibility and development load problems may become more serious. Therefore, the compatibility and development load problems deteriorate system performance and increase developmental costs.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

The exemplary embodiments provide a remote user interface (RUI) that shares an application program interface (API) between RUI devices to secure compatibility between the RUI devices and to inhibit an increase in developmental costs, a RUI server, a RUI terminal apparatus and a method of providing a RUI service.

According to an aspect of the exemplary embodiments, there is provided a remote user interface (RUI) system including: a first device, a second device configured to call a common application program interface (API) to request a RUI service from a first device; the first device being configured to process the called common API in response to the request in order to provide the RUI service to the second device.

The first and second devices may respectively include browsers that support a call of the common API and render a processing result of the called common API.

The common API may process data that is related to at least one of a channel list, an electronic program guide (EPG), a menu, a content, content synchronization and a device control.

The first device may include a common API processor that processes the called common API.

According to another aspect of the exemplary embodiments, there is provided a RUI server including: a communicator configured to communicate with a RUI terminal apparatus; an API processor configured to process the call of the common API, in response to call of a common API being received from the RUI terminal apparatus; and a controller configured to provide a RUI service to the RUI terminal apparatus, according to the processing result.

The RUI server may further include: a browser configured to support the call of the common API and render the processing result of the called common API.

The common API may process data that is related to at least one of a channel list, an EPG, a menu, a content, content synchronization and a device control.

The RUI server may further include: an API processor configured to process the called common API.

According to another aspect of the exemplary embodiments, there is provided a RUI terminal apparatus including: a communicator configured to communicate with a RUI server; a browser configured to support a call of a common API that processes a preset function in the RUI server; and a controller configured to process the call of the common API, transmit the processing result to the RUI server, and receive a RUI service from the RUI server according to the processing result of the call of the common API.

The RUI terminal apparatus may further include: a browser configured to support the call of the common API and render the processing result of the called common API.

According to another aspect of the exemplary embodiments, there is provided a method of providing a RUI service. The method may include: calling a common API through a first device to request a RUI service from a second device; and processing the called common API through the second device in response to the request in order to provide the RUI service to the first device.

The method may further include: rendering the processing result of the called common API through at least one of the first and second devices.

The common API may process data that is related to at least one of a channel list, an EPG, a menu, a content, content synchronization and a device control.

According to another aspect of the exemplary embodiments, a method of providing an RUI service is provided. The method may include: receiving a call of a common API from a RUI terminal apparatus; processing the received call of the common API; and providing a RUI service to the RUI terminal apparatus according to the result of processing the received call.

The method may further include: rendering the processing result of the call of the common API.

The common API may process data that is related to at least one of a channel list, an EPG, a menu, a content, content synchronization and a device control.

The provided RUI service may be based on a markup language.

According to another aspect of the exemplary embodiments, there is provided a method of providing a RUI service. The method may include: requesting a call of a common API that processes a function performing a function preset in a RUI server; and receiving a RUI service from the RUI server according to a processing result of the call of the common API.

The method may further include: rendering the received RUI service.

The common API may process data that is related to at least one of a channel list, an EPG, a menu, a content, content synchronization and a device control.

The RUI provided service may be based on a markup language.

An aspect of the exemplary embodiments may provide a remote user interface (RUI) system including: an RUI server; an RUI terminal apparatus configured to call a common application program interface (API) to request a RUI service from the RUI server; and the RUI server configured to process the called common API in response to the request to provide the RUI service to the RUI terminal apparatus, wherein the RUI server shares a common API with the RUI terminal apparatus.

The RUI server may receive broadcasts and the RUI terminal apparatus may request broadcasts from the RUI server.

### BRIEF DESCRIPTION OF THE DRAWINGS

The above and/or other aspects will be more apparent by describing certain exemplary embodiments with reference to the accompanying drawings, in which:
FIG. 1 is a view which illustrates a structure of a remote user interface (RUI) system in the related art;
FIG. 2 is a block diagram which illustrates a structure of a RUI system according to an exemplary embodiment;
FIG. 3 is a block diagram which illustrates a structure of an RUI system of the related art;
FIG. 4 is a block diagram which illustrates a structure of a RUI system according to another exemplary embodiment;
FIG. 5 is a block diagram which illustrates a structure of a RUI server according to an exemplary embodiment;
FIG. 6 is a block diagram which illustrates a structure of a RUI terminal apparatus according to an exemplary embodiment; and
FIGS. 7 through 9 are flowcharts, which illustrate methods of providing an RUI service according to various exemplary embodiments;

### DETAILED DESCRIPTION OF THE EXEMPLARY EMBODIMENTS

Exemplary embodiments are described in greater detail with reference to the accompanying drawings.

In the following description, the same drawing reference numerals are used for the same elements, even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

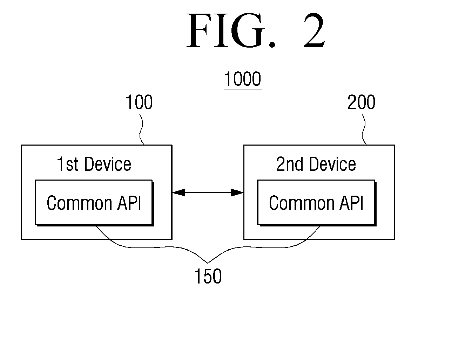

FIG. 2 is a block diagram illustrating a structure of a RUI system 1000 according to an exemplary embodiment.

Referring to FIG. 2, the RUI system 1000 includes a first device 100 and a second device 200.

The first and second devices 100 and 200 are electronic devices that are respectively connected to a home network to provide RUI services to counterpart devices or to be provided with RUI services from the counterpart devices.

An RUI is a concept that only refers to elements constituting a user interface (UI) such as an icon, a menu, a scrollbar, a window, a text, or the like. However, the RUI is not limited to these elements, but includes all types of data that are transmitted and received between the first and second devices 100 and 200; such as A/V data, image data, web address information, synchronization information, a control signal, a channel list, an EPG, information for controlling all types of devices, etc.

The first and second devices 100 and 200 may be various types of devices that may transmit and receive an RUI service from a home network. For example, at least one of a set-top box, a digital TV, a smart phone, a tablet PC, a laptop computer, a personal computer (PC), household electrical appliances such as a refrigerator, etc., a smart watch, smart glasses, a home network server and a digital multifunction peripheral may be an electronic device.

The first and second devices 100 and 200 may include display units that may display information and communicate with each other through wired and wireless communications. The first and second devices 100 and 200 have hardware and software configurations that may compute data and control devices. Structures and operations of the first and second devices 100 and 200 will be described later, in more detail.

As shown in FIG. 2, the first and second devices 100 and 200 have a common application program interface (API) 150. If a RUI service is provided to the first and second devices 100 and 200, the common API 150 is used to call a function that performs a function which is preset in the first device 100. If the second device 200 provides a RUI service to the first device 100, the common API 150 may be used to call a function that performs a function which is preset in the second device 200. The common API 150 may be implemented so as to call a function that performs functions which are preset in the first and second devices 100 and 200.

The above-described RUI service may be provided, based on a web browser. In other words, the first and second devices 100 and 200 may provide or may be provided with a RUI service on a web browser. In this case, the web browser supports a call of the common API 150 to transmit the call of the common API 150 to an API processing module or another device. The common API 150 may be a web API that is based on a web browser.

For example, if the first device 100 provides a moving picture stored in the second device 200, the second device 200 may request a moving picture, which is stored in the first device 100, through the common API 150 on a web browser of the second device 200. The first device 100 receives an API for reading the moving picture of the second device 200 and calls an API without an additional conversion of the received API. The first device 100 provides a moving picture read from a storage unit (not shown) to the second device 200. The second device 200 is provided with a moving picture according to a result of calling the API and renders the moving picture on the web browser of the second device 200.

In an exemplary embodiment, the first device 100 performs an operation of a RUI server, and the second device 200 performs an operation of a RUI client. However, operations of the first and second devices 100 and 200 are not limited thereto. In other words, both of the first and second devices 100 and 200 may operate as RUI servers or RUI clients. According to exemplary embodiments, both of the first and second devices 100 and 200 may simultaneously perform the operations of the RUI server and the RUI client.

Hereinafter, a RUI system according to the exemplary embodiments will be compared with an existing RUI system, in more detail. To help with an understanding of the exemplary embodiments, the terminology "RUI server" and "RUI terminal apparatus" will be used instead of the terminology "first device" and "second device."

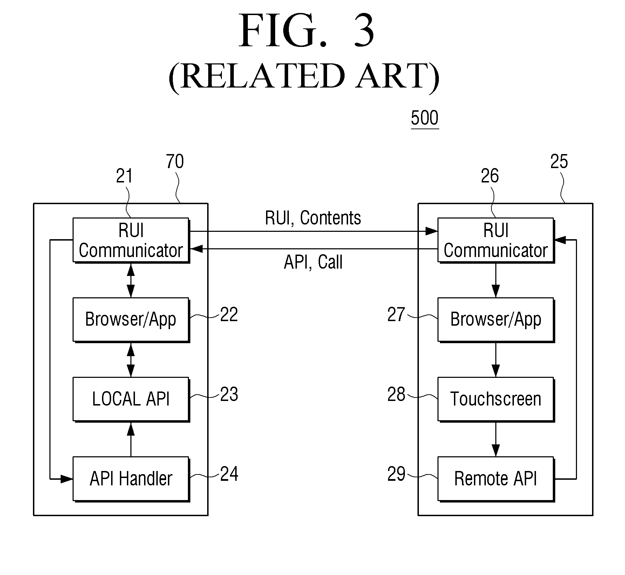

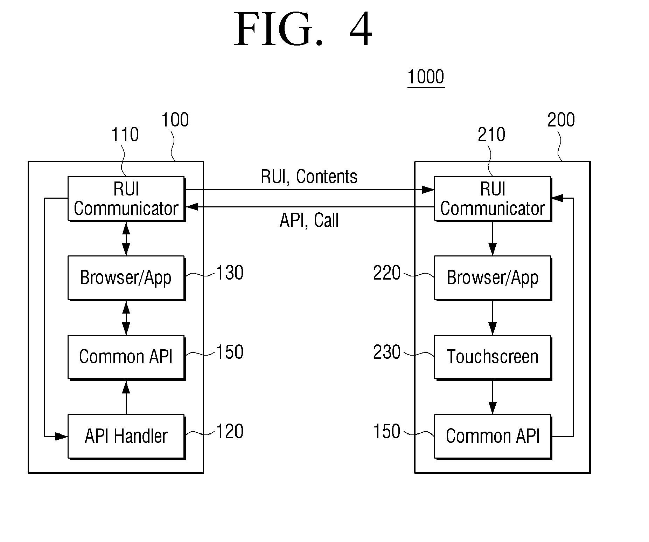

FIG. 3 is a block diagram which illustrates a structure of an RUI system 500 of the related art. FIG. 4 is a block diagram which illustrates a structure of a RUI system 1000, according to an exemplary embodiment.

FIG. 3 illustrates structures of a RUI server 70 and a RUI terminal apparatus 25 and a data flow in the RUI system 500 of the related art. To help with understanding of the exemplary embodiments, the RUI server 70 may receive a broadcast, and the RUI terminal apparatus 25 may request a broadcast channel change.

In an initial stage, the RUI server 70 and the RUI terminal apparatus 25 check mutual existences. In other words, the RUI server 70 and the RUI terminal apparatus 25 search for resources that may be connected to a home network. The RUI server 70 and the RUI terminal apparatus 25 prepare the requesting or providing of services according to preset priorities.

The RUI terminal apparatus 25 transmits data, which is to request receiving of broadcast data, to the RUI server 70. The RUI server 70 receives the data through a RUI communicator 21, a browser or application 22 parses the received data.

A browser or application 27 of the RUI terminal apparatus 25 uses a remote API 29 and thus may not directly use a local API 23 of the RUI server 70. If the RUI terminal apparatus 25 requests a service by using the remote API 29 thereof, the RUI terminal apparatus 25 or the RUI server 20 converts the remote API 29 into the local API 23 of the RUI server 70, which corresponds corresponding to the remote API 29. In response to parsing and converting processes being completed, the RUI server 70 tunes a frequency and transmits a broadcast stream, which is received through a broadcast receiver (not shown), to the RUI terminal apparatus 25, through the RUI communicator 21.

The RUI terminal apparatus 25 may request a broadcast channel change through a RUI communicator 26. The RUI server 70 transmits channel list information to the RUI terminal apparatus 25 through the RUI communicator 21. A browser or application 27 of the RUI terminal apparatus 25 parses received data in order to extract channel list information and renders the channel list information by using the remote API 29. If an event occurs where a user inputs a command for selecting a desired channel from a channel list through a touch screen 28 of the RUI terminal apparatus 25, (any input means may be used), the browser or the application 27 of the RUI terminal apparatus 25 processes the event, and a RUI communicator 26 transmits the processed event to the RUI server 70. If the processed event includes a call of the remote API 29, the remote API 29 may be converted into the local API 23 of the RUI server 70. This job may be performed by the API terminal apparatus 25 or by the RUI server 70.

The RUI server 70 receives a call of the remote API 29 or a call of the local API 23 through the RUI communicator 21, and an API handler 24 calls the local API 23 to finally process the event. The result of processing the event is tuning of a channel desired by a user, and the RUI server 70 transmits a broadcasting stream of the tuned channel to the RUI terminal apparatus 25 through the RUI communicator 21.

As described above, in the existing RUI system 500, the RUI server 20 and the RUI terminal apparatus 25 use different APIs. Therefore, the APIs are respectively converted into the APIs of counterpart devices, and compatibility between the devices is lowered. A developmental load of a developer who develops a web browser or an application handling a conversion of an API is therefore increased. Also, the one RUI server 20 may provide a service to another RUI terminal apparatus separate from the RUI terminal apparatus 25, and thus the RUI system 500 of the related art has poor performance and rapidly increases developmental costs.

The exemplary embodiments that will now be described solve these problems of the RUI system 500 of the related art.

FIG. 4 is a view which illustrates structures of a RUI server 100 and a RUI terminal apparatus 200 and data flow in the RUI system 1000, according to an exemplary embodiment. To help with an understanding of the exemplary embodiments, similar to the existing RUI system described above, the RUI server 100 will receive broadcast, and the RUI terminal apparatus 200 will request a broadcast channel change.

The RUI terminal apparatus 200 transmits data to the RUI server 100. In order to request the receiving of a broadcast, the RUI server 100 receives the data through a RUI communicator 110, and a browser or application 130 parses the received data.

A browser or application 220 of the RUI terminal apparatus 200 shares a common API 150 with the browser or application 130 of the RUI server 100, and thus a call of an API does not need to be converted into a corresponding local API of the RUI server 20. Therefore, a program is simplified, and thus processing efficiency is improved, and developmental load is reduced.

In response to a parsing process being completed, the RUI server 100 tunes a frequency and transmits a broadcasting stream to the RUI terminal apparatus 200 through the RUI communicator 110.

The RUI terminal apparatus 200 may request a broadcasting channel change through the RUI communicator 210. The RUI server 100 transmits channel list information to the RUI terminal apparatus 200 through the RUI communicator 210. The browser or application 220 of the RUI terminal apparatus 200 parses received data in order to extract the channel list information and renders the channel list information by using an API of the RUI terminal apparatus 200.

In response to the occurrence of an event where a user inputs a command to select a desired channel from a channel list through a touch screen 230 (wherein the touch screen 230 may be replaced with various types of user input means) of the RUI terminal apparatus 200, the browser or application 220 of the RUI terminal apparatus 200 processes the event, and the RUI communicator 210 transmits the processed event to the RUI server 100.

The RUI server 100 receives the processed event through the RUI communicator 110, and the browser or application 130 parses the received event to extract the common API 150. Here, the browser or application 220 of the RUI terminal apparatus 200 shares the common API 150 with the browser or application 130 of the RUI server 100, and thus a conversion of an API is not needed. Therefore, the program is simplified, processing efficiency is improved and developmental load is reduced.

An API handler 120 of the RUI server 100 calls the common API 150 to finally process the event. The result of processing the event is the tuning to a channel desired by the user, and the RUI server 100 transmits a broadcast stream of the tuned channel to the RUI terminal apparatus 200, through the RUI communicator 110.

As described above, in the RUI system 1000, according to the exemplary embodiments, an API is shared between RUI devices. Therefore, compatibility is secured between the RUI devices, and an increase in development cost is inhibited.

In the above-described exemplary embodiment broadcast streaming and a channel selection have been described. However, the exemplary embodiments are not limited thereto. In other words, the exemplary embodiments may be applied to all types of RUI services described above.

Structures of the RUI server 100 and the RUI terminal apparatus 200 will now be described.

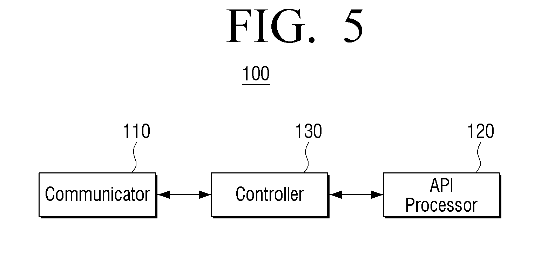

FIG. 5 is a block diagram illustrating a structure of the RUI server 100, according to an exemplary embodiment.

Referring to FIG. 5, the RUI server 100 includes a communicator 110, an API processor 120 and a controller 130.

The communicator 110 is an element that transmits a content to the RUI terminal apparatus 200. In particular, the communicator 110 receives a RUI service request from the RUI terminal apparatus 200 and transmits a RUI service to the RUI terminal apparatus 200.

The communicator 110 may perform communications according to various types of wired and wireless communication standards, along with a protocol complying with CEA-2014, which is a RUI technology standard.

For example, the communicator 110 may perform communications according to a WiFi communication standard complying with an IEEE 802.11 technology standard, a third generation cellular communication standard, such as Wideband CDMA (WCDMA), High Speed Downlink Packet Access (HSDPA), High Speed Uplink Packet Access (HSUPA), or High Speed Packet Access (HSPA), Mobile WiMAX that is a fourth generation mobile communication technology, or WiBro and Long Term Evolution (LTE) standards. The communicator 110 may also comply with other types of short range communication standards, such as a Bluetooth® standard, an infrared data association (IrDA) standard, a near field communication (NFC) standard, a Zigbee® standard, and a wireless LAN standard. The communicator 110 may also comply with wire interface standards such as High Definition Multimedia Interface (HDMI), Digital Video/Visual interface (DVI), Mobile High-definition Link (MHL), Digital Interactive Interface for Video & Audio (Diiva).

In response to an API call that is supported by the RUI server 100 being received from the RUI terminal apparatus 200, the API processor 120 processes the API call. As described above, the API processor 120 processes the common API 150 to parse received data without an additional conversion process, in order to process a call of the common API 150. The API processor 120 may be included as an element of the controller 130 that will be described later or may be included as an additional hardware or software element in the RUI server 100. The API processor 120 may also be included as a function of a web browser that provides a RUI service.

The controller 130 controls an overall operation of the RUI server 100. In particular, the controller 130 controls the transmitting of a RUI service to the RUI terminal apparatus, 200 according to a processing result. The controller 130 includes a hardware configuration, such as a micro processing unit (MPU), a central processing unit (CPU), a cache memory, a data bus, or the like, an operating system (OS), and a software configuration of an application that performs a particular purpose. A control command for elements for an operation of the RUI server 100 is read from a memory according to a system clock, and an electrical signal is generated according to the read control command in order to operate elements of hardware.

Although not shown in FIG. 5, the RUI server 100 includes an essential structure that is included in an electronic calculator of the related art. In other words, the RUI server 100 includes a high-capacity auxiliary memory such as a hard disk or a Blue-ray Disk™, an input and output unit such as a touch screen, a keyboard, or a monitor, and a hardware configuration such as a data bus, or the like, and includes an application, a framework, or an OS that may perform functions of the controller 130 and the API processor 120.

In response to the RUI server 100 performing a service that provides a stored content, the RUI server 100 may include a high-capacity storage unit (not show). In this case, the high-capacity storage unit may construct service data in the form of a cloud environment. A form of a cloud is not restricted, and thus the cloud may be implemented as a private cloud that shares data between devices connected to a home network.

The high-capacity storage unit may include an application that operates in the RUI terminal apparatus 200. In response to the RUI server 100 providing a RUI service, the RUI server 100 provides a stored application to the RUI terminal apparatus 200. The RUI terminal apparatus 200 installs and operates the received application in a browser. The application may provide various types of RUI services, as described above. The application may perform a function of a plug-in that takes charge of intermediate processing of the common API 150.

The RUI server 100 may further include a browser (not shown) that renders a processing result of the common API 150. The browser may parse and render data received from the RUI terminal apparatus 200 or may process an event which occurs in the RUI server 100 and may transmit the processed event to the API processor 120.

A structure of the RUI terminal apparatus 200 will now be described.

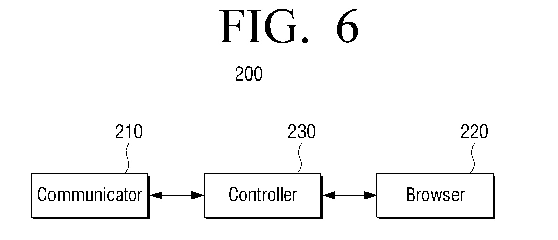

FIG. 6 is a block diagram which illustrates a structure of the RUI terminal apparatus 200, according to an exemplary embodiment.

Referring to FIG. 6, the RUI terminal apparatus 200 according to an exemplary embodiment includes a communicator 210, a browser 220 and a controller 230.

The communicator 210 receives a RUI service from the RUI server 100. In particular, the communicator 210 transmits a RUI service request to the RUI server 100 and receives the RUI service from the RUI server 100.

Similar to the RUI server 100, the communicator 110 may perform communications according to various types of wired and wireless communication standards, along with a protocol that complies with CEA-2014 that is a RUI technology standard.

Like the RUI server 100, the communicator 110 may comply with a WiFi standard, WCDMA, HSDPA, HSUPA, HSPA, Mobile WiMAX, WiBro, and LTE standards, a Bluetooth® standard, an IrDA standard, an NFC standard, a Zigbee® standard, a wireless LAN standard, HDMI, DVI, MHS, and Diiva standards, etc.

The browser 220 renders the RUI service received from the RUI server 100. In other words, the browser 220 parses data received from the RUI server 100, displays the parsed data on a screen, and in response to a user input event occurring, generates a call request of the common API 150. In other words, the browser 220 includes the common API 150 that calls a function which performs a function preset in the RUI server 100.

The controller 230 controls an overall operation of the RUI terminal apparatus 200. In particular, in response to there being a call of the common API 150, the controller 230 controls the transmitting of the call of the common API 150 to the RUI server 100. The controller 230 controls the receiving of the RUI service from the RUI server 100, according to a result of processing the call of the common API 150.

The controller 230 includes a hardware configuration such as an MPU, a CPU, a cache memory, a data bus, or the like, an OS, and a software configuration of an application that performs a particular purpose. A control command for elements for an operation of the RUI terminal apparatus 200 is read from a memory according to a system clock, and an electrical signal is generated according to the read control signal to operate elements of hardware.

In response to an application for processing the common API 150 being received from the RUI server 100, the received application operates as a plug-in of the browser 220. The application is combined with the browser 220 to recognize the common API 150 and transmit the recognized common API 150 to the communicator 210.

Although not shown in FIG. 6, the RUI terminal apparatus 200 also includes an essential element that is included in a general electronic calculator. In other words, the RUI terminal apparatus 200 includes a high-capacity auxiliary memory unit such as a hard disk or a Blue-ray Disk™, an input and output unit such as a keyboard, a monitor, a touch screen, or a display, and a hardware configuration such as a data bus, or the like. The RUI terminal apparatus 200 also includes an application, a framework, or an OS that may perform functions of the controller 230 and the browser 220.

Methods of providing a RUI service according to various exemplary embodiments will now be described.

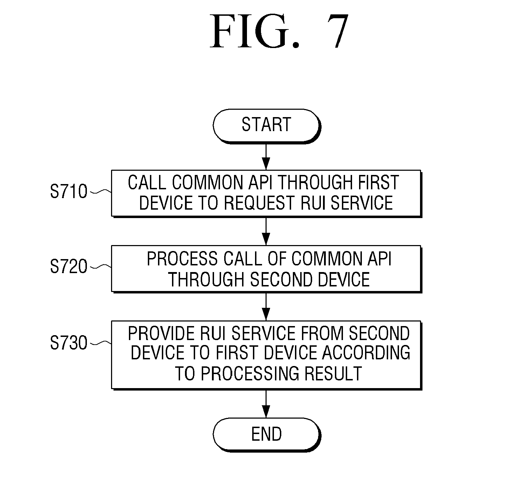

FIGS. 7 through 9 are flowcharts which illustrate methods of providing a RUI service according to various exemplary embodiments.

Referring to FIG. 7, a method of providing a RUI service according to an exemplary embodiment includes operations S710 through S730. In operation S71 0, a first device calls a common API to request a RUI service from a second device. In operation S720, the second device processes the called common API in response to the request. In operation S730, the second device provides the RUI service to the first device, according to the processing result.

The above-described method of FIG. 7 may further include: rendering the processing result of the called common API through at least one of the first and second devices.

The common API may process data that is related to at least one of a channel list, an EPG, a menu, a content, content synchronization and a device control.

The provided RUI service may be based on a markup language.

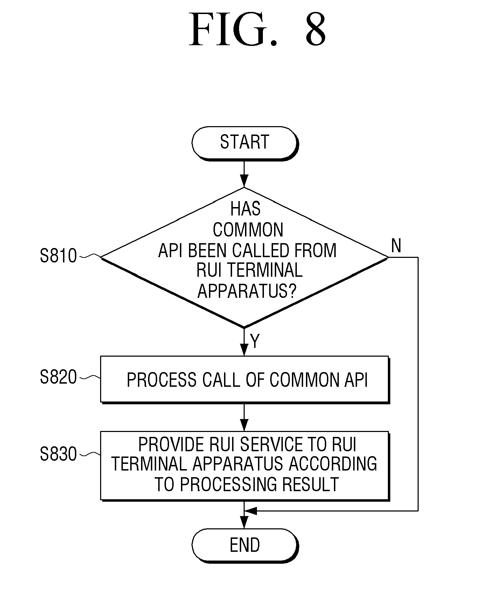

Referring to FIG. 8, a method of providing a RUI service according to another exemplary embodiment includes operations S810 through S830. In operation S810, a call of a common API is received from a RUI terminal apparatus. In operation S920, the received call of the common API is processed. In operation S930, a RUI service is provided to the RUI terminal apparatus according to the processing result.

The above-described method may further include: rendering the processing result of the called common API.

The common API may process data that is related to at least one of a channel list, an EPG, a menu, a content, content synchronization and a device control.

The RUI service may be provided based on a markup language.

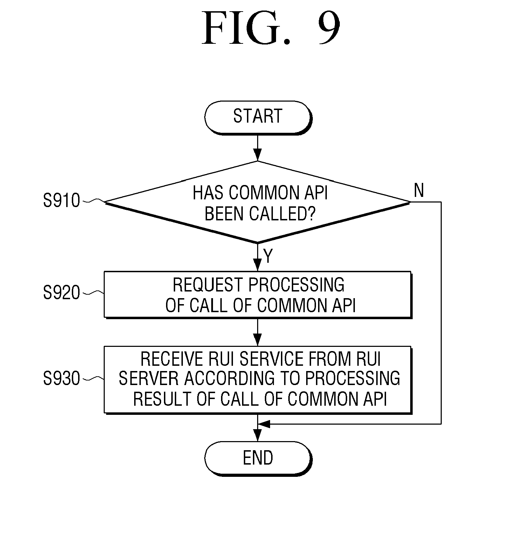

Referring to FIG. 9, a method of providing a RUI service according to another exemplary embodiment includes operations S910 through S930. In operation S910, a determination is made as to whether a common API for processing a function performing a function preset in a RUI server has been called. In response to a determination in operation S910 that the common API has been called, the RUI server is requested to process a call of the common API in operation S920. In operation S930, a RUI service is received from the RUI server, according to the result of processing the call of the common API.

The above-described method may further include: rendering the received RUI service.

The common API may process data that is related to at least one of a channel list, an EPG, a menu, a content, content synchronization and a device control.

The RUI service may be provided based on a markup language.

The above-described method of providing the RUI service may be stored as a program on a non-transitory computer-readable storage medium. The non-transitory computer-readable medium refers to a medium which does not store data for a short time such as a register, a cache memory, a memory, or the like, but semi-permanently stores data and is readable by a device. In particular, the above-described applications or programs may be stored and provided on a non-transitory computer readable medium such as a CD, a DVD, a hard disk, a Blue-ray Disk™, a universal serial bus (USB), a memory card, a ROM, or the like.

The above-described method may also be embedded and provided in a hardware integrated circuit (IC) chip as embedded software and may be included as some elements of the RUI server 100 and the RUI terminal apparatus 200.

According to various exemplary embodiments as described above, an API may be shared between RUI devices. Therefore, compatibility between the RUI devices may be secured, and an increase in development cost may be inhibited. In addition, the same service experience environment may be provided to a user regardless of a local device or a remote device.

According to various exemplary embodiments as described above, the exemplary embodiments provide a RUI system, a RUI server, a RUI terminal apparatus, and a RUI service providing method that may share an API between RUI devices in order to secure compatibility between the RUI devices and inhibit an increase in development cost.

The foregoing exemplary embodiments and advantages are merely exemplary and are not to be construed as limiting. The present teachings can be readily applied to other types of apparatuses. Also, the description of the exemplary embodiments is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote user interface (RUI) system comprising:
a second device configured to call a common application program interface (API) to request a RUI service from a first device; and
the first device configured to process the called common API in response to the request to provide the RUI service to the second device.

2. The RUI system of claim 1, wherein the first and second devices respectively comprise browsers that support a call of the common API and render a processing result of the called common API.

3. The RUI system of claim 1 or 2, wherein the common API processes data that is related to at least one of a channel list, an electronic program guide (EPG), a menu, a content, content synchronization and a device control.

4. The RUI system of any one of claims 1 through 3, wherein the first device comprises a common API processor that processes the called common API.

5. A RUI server comprising:
a communicator configured to communicate with a RUI terminal apparatus;
an API processor configured to, if a call of a common API is received from the RUI terminal apparatus, process the call of the common API; and
a controller configured to provide a RUI service to the RUI terminal apparatus, according to the processing result.

6. The RUI server of claim 5, further comprising:
a browser configured to support the call of the common API and render the processing result of the called common API.

7. The RUI server of claim 5 or 6, wherein the common API processes data that is related to at least one of a channel list, an EPG, a menu, a content, content synchronization and a device control.

8. The RUI server of claim 5, further comprising:
an API processor configured to process the called common API.

9. A RUI terminal apparatus comprising:
a communicator configured to communicate with a RUI server;
a browser configured to support a call of a common API that processes a function preset in the RUI server; and
a controller configured to process the call of the common API, transmit the processing result to the RUI server, and receive a RUI service from the RUI server according to the processing result of the call of the common API.

10. The RUI terminal apparatus of claim 9, further comprising:
a browser configured to support the call of the common API and render the processing result of the called common API.

11. A method of providing a RUI service, the method comprising:
calling a common API through a first device to request a RUI service from a second device; and
processing the called common API through the second device in response to the request to provide the RUI service to the first device.

12. The method of claim 11, further comprising:
rendering the processing result of the called common API through at least one of the first and second devices.

13. The method of claim 11 or 12, wherein the common API processes data that is related to at least one of a channel list, an EPG, a menu, a content, content synchronization, and a device control.

14. The method of claim 11, wherein the RUI service is provided based on a markup language.

15. A method of providing a RUI service, the method comprising:
receiving a call of a common API from a RUI terminal apparatus;
processing the received call of the common API; and
providing a RUI service to the RUI terminal apparatus according to the processing result.
